# EUROPÄISCHE PATENTANMELDUNG

(11) **EP 3 364 091 A1**
(43) Veröffentlichungstag der Anmeldung: **22.08.2018**
(21) Anmeldenummer: 18165509.3
(22) Anmeldetag: 23.10.2014
(51) Int. Cl.: F16L 41/02, F16L 43/00, F16L 47/32, B29C 45/16, B29C 45/26, F15D 1/04, F16L 45/00, B29L 31/24

(54) **FITTING**

(62) Teilanmeldung aus: 14190156.1
(71) Anmelder: Geberit International AG, 8645 Jona (CH)
(72) Erfinder: KARL, Matthias, 8645 Jona (CH)
(74) Vertreter: Frischknecht, Harry Ralph

(57) **Zusammenfassung**

Ein Fitting (1), insbesondere aus Kunststoff, zum Umlenken oder Abzweigen von in Rohrleitungen strömenden Medien, umfasst eine Gehäusewand (2), die einen Durchflusskanal (3) begrenzt, welcher sich mindestens von einem Fittingeingang (4) zu einem Fittingausgang (5) erstreckt. Der Durchflusskanal (3) einen sich entlang einer ersten Mittelachse (M6) erstreckenden ersten Kanalabschnitt (6) und einen sich entlang einer zweiten Mittelachse (M7) erstreckenden zweiten Kanalabschnitt (7) umfasst, wobei die beiden Mittelachsen (M6, M7) winklig geneigt, insbesondere rechtwinklig, zueinander stehen und die beiden Kanalabschnitte (6, 7) derart angeordnet sind, dass sich deren Mittelachsen (M6, M7) schneiden und wobei im Bereich des Übergangs (8) zwischen dem ersten Kanalabschnitt (6) und dem zweiten Kanalabschnitt (7) eine innere Übergangskante (9) vom ersten Kanalabschnitt (6) zum zweiten Kanalabschnitt (7) gebildet ist, welche Übergangskante (9) mit einer Rundung (10) gerundet ausgebildet ist. Bezüglich des Durchflusskanals (3) gegenüber der Übergangskante (9) ist ein Einsatz (11) in die Gehäusewand (2) eingesetzt, welcher Einsatz (11) stoffschlüssig mit der Gehäusewand (2) in Verbindung steht, wobei der Einsatz (11) derart ausgebildet ist, dass die Übergangskante (9) mit der Rundung (10) bei der Herstellung durch einen Durchbruch (12), der vom Einsatz (11) überdeckt wird, des Fittings zugänglich ist.

## Beschreibung

### TECHNISCHES GEBIET

Die vorliegende Erfindung betrifft ein Fitting nach dem Oberbegriff von Anspruch 1.

### STAND DER TECHNIK

Aus dem Stand der Technik sind Fittings in vielen Formen bekannt. Beispielsweise sind Fittings in der Gestalt von T-Stücken oder Bogenstücken aus dem Stand der Technik bekannt geworden. Derartige Fittings dienen der Verbindung von winklig geneigt zueinander stehenden Leitungszweigstücken. Solche Fittings werden aus Metall oder Kunststoff gefertigt.

Viele Fittings aus dem Stand der Technik weisen dabei im Bereich des winklig geneigten Übergangs eine Form auf, welche grosse strömungstechnische Verluste bedingt. Die Form ist dabei meist herstellbedingt, weil die Bereich des winklig geneigten Übergangs nicht für ein Werkzeug zugänglich, so dass diese Bereiche optimiert werden können.

Aus dem Stand der Technik sind Lösungen für dieses Problem bekannt geworden. Beispielsweise wird in der DE 10 2009 039 983 vorgeschlagen, den Fitting derart auszubilden, dass dieser schalenartig geteilt wird und dann die beiden Schalen mediendicht verbunden werden. Die schalenartige Teilung hat den Nachteil, dass eine verhältnismässig grosse Trennfläche zwischen den beiden Schalen vorhanden ist, was die Dauerhaftigkeit der Fittings negativ beeinträchtigt.

Aus der DE 10 2011 013 099 ist ein Fitting bekannt geworden, welcher innerhalb des Durchflusskanals einen Strömungsleitkörper umfasst, der Abzweigbereich strömungstechnisch verbessert. Allerdings ergeht aus der DE 10 2011 013 099 der Nachteil, dass die Fertigung ausgesprochen aufwändig ist.

### DARSTELLUNG DER ERFINDUNG

Ausgehend von diesem Stand der Technik liegt der Erfindung eine Aufgabe zugrunde, ein Fitting anzugeben, welches die Nachteile des Standes der Technik überwindet. Insbesondere soll ein Fitting angegeben werden, dessen Durchflusskanal bezüglich möglicher Druckverlusten optimiert ausgebildet ist und welches sich dennoch wirtschaftlich herstellen lässt.

Diese Aufgabe löst der Gegenstand von Anspruch 1. Demgemäss umfasst ein Fitting zum Umlenken oder Abzweigen von in Rohrleitungen strömenden Medien eine Gehäusewand, die einen Durchflusskanal begrenzt, welcher sich mindestens von einem Fittingeingang zu einem Fittingausgang erstreckt. Der Durchflusskanal umfasst einen sich entlang einer ersten Mittelachse erstreckenden ersten Kanalabschnitt und einen sich entlang einer zweiten Mittelachse erstreckenden zweiten Kanalabschnitt, wobei die beiden Mittelachsen winklig geneigt, insbesondere rechtwinklig, zueinander stehen und die beiden Kanalabschnitte derart angeordnet sind, dass sich deren Mittelachsen schneiden und wobei im Bereich des Übergangs zwischen dem ersten Kanalabschnitt und dem zweiten Kanalabschnitt eine innere Übergangskante vom ersten Kanalabschnitt zum zweiten Kanalabschnitt gebildet ist, welche Übergangskante mit einer Rundung gerundet ausgebildet ist. Bezüglich des Durchflusskanals ist gegenüber der Übergangskante mit der Rundung ein Einsatz in die Gehäusewand eingesetzt, welcher Einsatz stoffschlüssig mit der Gehäusewand in Verbindung steht, wobei der Einsatz derart ausgebildet ist, dass die Übergangskante mit der Rundung während der Herstellung durch einen Durchbruch, der vom Einsatz überdeckt wird bzw. in welchen der Einsatz eingesetzt wird, zugänglich ist.

Der Durchbruch, welcher dann vom Einsatz vollständig überdeckt wird bzw. in welchen der Einsatz eingesetzt ist, stellt demnach eine Öffnung oder Fenster bereit, durch welches im Zuge der Herstellung des Fittings, ein Werkzeug in den Durchflusskanal eingeführt werden kann, um die besagte Rundung zu formen. Der Durchbruch wird im Zuge der Herstellung dann mit dem besagten Einsatz überdeckt. Insofern ist der Durchbruch während der Herstellung vorhanden und wird ebenfalls während der Herstellung mit dem Einsatz überdeckt.

Die Bildung des Durchbruches mit der anschliessenden Verschliessung durch den Einsatz hat den Vorteil, dass die Übergangskante, an welcher die Rundung liegt, während der Herstellung zugänglich ist, was die Designfreiheit massiv erhöht. Insbesondere kann die Rundung sehr einfach und vor allem wirtschaftlich geformt werden. Die Innenkontur ist einfach entformbar.

Die Anordnung des Einsatzes hat viele Vorteile. Die Rundung kann so ausgebildet werden, dass diese möglichst strömungsoptimiert ist. Weiter kann der Einsatz während des Spritzgiessens hergestellt werden, wodurch ein aufwändiges und vor allem nachträgliches Anschweissen von zusätzlichen Teilen entfällt.

Der Einsatz erstreckt sich vorzugsweise ausschliesslich über einen Teilbereich der Gehäusewand, nämlich nur so, dass die Rundung durch ein Spritzgusswerkzeug zugänglich ist. Der Einsatz erstreckt sich vorzugsweise ausschliesslich nur teilweise um die jeweilige Mittelachse bzw. die jeweiligen Mittelachsen herum, das heisst, dass ein vollständiges Umlaufen des Einsatzes um die Mittelachse nicht vorgesehen ist. Vorzugsweise ist der Einsatz so klein als möglich zu wählen, so dass er sich ausschliesslich derart erstreckt, dass die besagte Rundung bzw. die besagten Rundungen zugänglich sind.

Der Einsatz bildet einen Teil der Gehäusewand und verschliesst den für das Werkzeug vorgesehenen Durchbruch. Besonders bevorzugt weist der Einsatz mindestens im Bereich der Trennstelle zwischen Durchbruch und Einsatz eine Wandstärke auf, welche der Wandstärke der benachbarten Bereiche der Gehäusewand entspricht. Der Einsatz wird vorzugsweise mit einem Spritzgiessverfahren in den Durchbruch eingespritzt und verbindet sich dabei mit der Gehäusewand.

Besonders bevorzugt umfasst das Fitting einen dritten Kanalabschnitt, welcher sich entlang einer dritten Mittelachse erstreckt, wobei die dritte Mittelachse kollinear zur ersten Mittelachse verläuft. Die dritte Mittelachse steht vorzugsweise rechtwinklig zur zweiten Mittelachse. Im Bereich des Übergangs zwischen dem zweiten Kanalabschnitt und dem dritten Kanalabschnitt ist eine weitere innere Übergangskante vom zweiten Kanalabschnitt zum dritten Kanalabschnitt gebildet, welche Übergangskante mit einer Rundung gerundet ausgebildet ist. Der besagte Einsatz erstreckt sich in dieser Ausführungsform mindestens von der Übergangskante zwischen dem ersten und zweiten Kanalabschnitt bis hin zur Übergangskante zwischen dem zweiten und dritten Kanalabschnitt.

Unabhängig von der Ausbildung mit zwei oder drei Kanalabschnitten ist es für die Form des Einsatzes bzw. des Durchbruches vorteilhaft, wenn die lichte Weite des Durchbruches derart ist, dass die Rundungen durch ein Werkzeug, welches den Durchbruch bildet und durch den Durchbruch bewegt wird, erreichbar sind.

Vorzugsweise erstreckt sich der erste Kanalabschnitt entlang der ersten Mittelachse gesehen bis hin zur Rundung zylindrisch mit im Wesentlichen konstantem Durchmesser. Der zylindrische Durchmesser geht dann in die Rundung über, wobei der Übergang durch einen Übergangspunkt definiert ist. Der Übergangspunkt ist ein geometrischer Ort auf einer Trennlinie des Übergangs vom zylindrischen Durchmesser in die Rundung, wobei der Übergangspunkt den Punkt auf der Trennlinie definiert, welcher von der zweiten Mittelachse am weitesten entfernt liegt. Der Einsatz erstreckt sich in Richtung der ersten Mittelachse vom zylindrischen Bereich, also im Wesentlichen vom Übergangspunkt, zur zweiten Mittelachse hin über die besagte Rundung hinweg. In Richtung der ersten Mittelachse gesehen weist der Einsatz also eine Länge auf, welche sich vom zylindrischen Bereich vorzugsweise bis hin zur zweiten Mittelachse oder - je nach Ausführung - über die zweite Mittelachse hinweg erstreckt. Alternativerweise erstreckt sich der Einsatz genau vom Übergangspunkt zwischen dem zylindrischen Bereich und der Rundung zur zweiten Mittelachse hin. In Richtung der ersten Mittelachse gesehen weist der Einsatz dann eine Länge auf, welche sich vom Übergangspunkt vorzugsweise bis hin zur zweiten Mittelachse oder über die zweite Mittelachse hinweg erstreckt.

Beim Fitting mit zwei Kanalabschnitten handelt es sich beispielsweise um einen Rohrbogen. Beim Fitting mit den drei Kanalabschnitten handelt es sich beispielsweise um ein T-Stück. Die Gehäusewand hat aussenseitig bei jedem der Kanalabschnitte die Form eines Anschlussstutzens. Folglich erstreckt sich jeder Kanalabschnitt innerhalb eines Anschlussstutzens, welcher durch die Gehäusewand bereitgestellt wird.

Bei einem Rohrbogen erstreckt sich der Einsatz auf der Bogenaussenseite vom Übergangspunkt zwischen dem zylindrischen Bereich des ersten Kanalabschnittes und der Rundung bis hin zum Übergangspunkt zwischen dem zylindrischen Bereich des zweiten Kanalabschnittes und der Rundung. Auch hier kann sich der Einsatz leicht in den zylinderischen Bereich hinein erstrecken.

Bei einem T-Stück mit den drei Kanalabschnitten erstreckt sich der Einsatz vorzugsweise wie folgt: Der dritte Kanalabschnitt erstreckt sich entlang der dritten Mittelachse gesehen bis hin zur Rundung zylindrisch mit im Wesentlichen konstantem Durchmesser. Der zylindrische Durchmesser geht dann in die Rundung über, wobei der Übergang durch einen Übergangspunkt definiert ist. Der Einsatz erstreckt sich in Richtung der dritten Mittelachse vom zylindrischen Bereich zur zweiten Mittelachse hin über die besagte Rundung hinweg. In Richtung der dritten Mittelachse gesehen weist der Einsatz also eine Länge auf, welche sich vom zylindrischen Bereich vorzugsweise die zweite Mittelachse hinweg bis hin zum Übergangspunkt über im ersten Kanalabschnitt erstreckt. Der Einsatz kann sich über die besagten Übergangspunkte hinweg erstrecken. Alternativerweise erstreckt sich der Einsatz genau vom Übergangspunkt zwischen dem zylindrischen Bereich und der Rundung im dritten Kanalabschnitt und demselben Übergangspunkt im ersten Kanalabschnitt.

Vorzugsweise erstreckt sich der Einsatz, insbesondere bei drei Kanalabschnitten, mindestens über die lichte Weite des zweiten Kanalabschnittes bis über oder mindestens an den Rand der Rundung hinweg. Somit kann ein guter Zugang zum Übergangsbereich zwischen dem ersten Kanalabschnitt und dem zweiten Kanalabschnitt bzw. zwischen dem dritten Kanalabschnitt und dem zweiten Kanalabschnitt geschaffen werden.

Der Einsatz erstreckt sich - in allen Ausführungen - besonders bevorzugt von Rundung zu Rundung. Der Einsatz überdeckt besonders bevorzugt gesehen im Wesentlichen die lichte Weite des zweiten Kanalabschnittes bis an bzw. leicht über die Rundung, welche den Mündungsbereich vom ersten bzw. dritten Kanalabschnitt in den zweiten Kanalabschnitt umgibt.

Besonders bevorzugt ist genau ein einziger Einsatz vorhanden, welcher wie oben erwähnt einen Teil der Gehäusewand darstellt. Vorzugsweise nimmt der Einsatz bezüglich der Aussenfläche der Gehäusewand einen kleinen Teil von maximal einem Fünftel der gesamten Aussenfläche ein.

Die Gehäusewand und der Einsatz werden stoffschlüssig miteinander verbunden. Eine spätere Trennung zwischen Gehäusewand und Einsatz ist nicht vorgesehen. Es wird ein einstückiges Fitting bereitgestellt.

Die Gehäusewand und der Einsatz sind vorzugsweise aus demselben Kunststoff. Insbesondere aus derselben Farbe. Der Einsatz und die Gehäusewand können aber auch eine andere Farbe aufweisen. Beispielsweise können der Einsatz aus einem transparenten Kunststoff und die Gehäusewand aus einem opaken Kunststoff hergestellt sein.

Bei einem T-Stück erstreckt sich der Einsatz von einer Ebene, welche rechtwinklig zur zweiten Mittelachse und durch die erste bzw. die dritte Mittelachse verläuft, bezüglich des zweiten Kanalabschnittes weg, so dass der Einsatz gegenüber dem zweiten Kanalabschnitt liegt.

Der Einsatz ist vorzugsweise schalenförmig ausgebildet. Bei einem T-Stück ist der Einsatz vorzugsweise als eine halbzylindrische Schale ausgebildet. Die halbzylindrische Schale erstreckt sich vorzugsweise um den halben Umfang des ersten und ggf. des dritten Kanalabschnittes. Bei einem Rohrbogen weist die Schale die Form einer Teilschale der Aussenseite des Rohrbogens auf.

Vorzugsweise sind die Trennstellen zwischen der Gehäusewand und dem Einsatz als ebene oder gestufte Flächen ausgebildet. Die Flächen können dabei verschiedenartig orientiert sein und beispielsweise auch Hinterschnitte oder dergleichen aufweisen.

Die besagten Flächen der Trennstellen verlaufen vorzugsweise rechtwinklig oder parallel zu den Mittelachsen. Die Flächen können aber auch winklig geneigt zu den Mittelachsen verlaufen. Auch ist eine Kombination denkbar, beispielsweise können die Flächen der Trennstellen oder Teile der Trennflächen, rechtwinklig, parallel und winklig geneigt zu den besagten Mittelachsen verlaufen.

Vorzugsweise ist jeder der Kanalabschnitte aussenseitig mit einer Dichtkontur ausgebildet, auf welcher ein Rohr fluiddicht lagerbar ist. Die Dichtkontur ragt dabei in das Rohr ein und das Rohr wird gegen die Dichtkontur gepresst.

Der Radius der Rundung liegt vorzugsweise im Bereich von 20% bis 60%, insbesondere im Bereich von 30% bis 40%, des Innendurchmessers der jeweiligen Kanalabschnitte. Vorzugweise weisen alle Kanalabschnitte den gleichen Innendurchmesser auf.

Ein Spritzgiessverfahren zur Herstellung eines Fittings nach obiger Beschreibung ist dadurch gekennzeichnet,
dass in einem ersten Schritt die Gehäusewand ohne den Einsatz hergestellt wird, wobei pro Kanalabschnitt ein zylindrischer Kern bereitgestellt wird und wobei durch den Durchbruch, welcher vom Einsatz überdeckt wird, ein zusätzlicher Kern zur Bereitstellung der besagten Rundung durch die Gehäusewand in den Durchflusskanal einragt, und
dass in einem zweiten Schritt mindestens ein Kern entlang des ersten und/oder des dritten Kanalabschnittes in den Durchflusskanal bis in Bereich des Durchbruches eingeschoben wird und wobei der Durchbruch mit dem Einsatz zugespritzt wird.

Besonders bevorzugt werden die beiden Schritte in der gleichen Spritzgiessform ausgeführt. Die Form kann dabei vom gleichen Spritzaggregat oder von zwei verschiedenen Spritzaggregaten beschickt werden.

Beim Spritzgiessverfahren handelt es sich vorzugsweise um ein zweistufiges Spritzgiessverfahren.

Weitere Ausfuhrungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische, schematische, Ansicht eines Fittings mit einem offenem Durchbruch nach einer Ausfuhrungsform der vorliegenden Erfindung;
- Fig. 2: eine perspektivische, schematische, Ansicht des Fittings nach der Figur 1 mit geschlossenem Durchbruch;
- Fig. 3: eine Schnittdarstellung des Fittings nach Figur 1 und 2;
- Fig. 4: schematische Ansichten zur Herstellung eines Fittings nach den Figuren 1 bis 3;
- Fig. 5: schematische Ansichten zur Herstellung eines Fittings nach einer weiteren Ausführungsform; und
- Fig. 6: eine schematische Ansicht einer beispielhaften Vorrichtung zur Herstellung eines erfindungsgemässen Fittings.

### BESCHREIBUNG BEVORZUGTER AUSFÜHRUNGSFORMEN

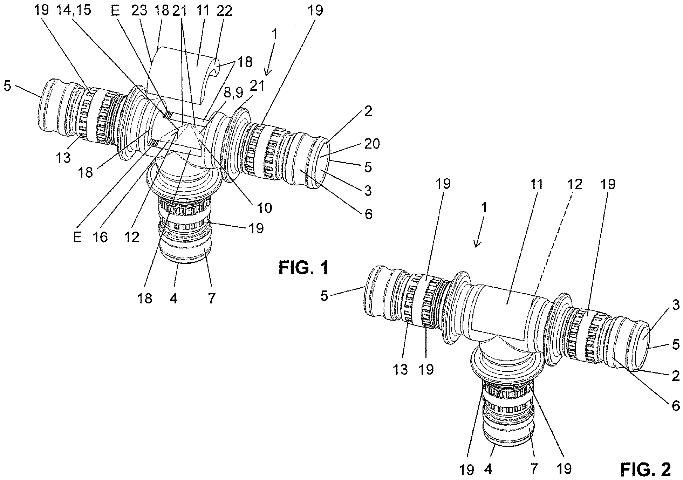

In den Figuren 1 bis 3 wird ein Fitting 1 zur Umlenkung oder Abzweigung von in Rohrleitungen strömenden Medien, wie Wasser, perspektivisch und in einer Schnittdarstellung gezeigt. Das Fitting weist hier die Gestalt eines T-Stückes auf. Das Fitting kann aber auch die Form eines Rohrbogens mit verschiedenen Winkeln oder eines Umlenkstückes aufweisen.

Das Fitting 1 umfasst eine Gehäusewand 2, die einen Durchflusskanal 3 begrenzt. Der Durchflusskanal 3 erstreckt sich dabei von einem Fittingeingang 4 zu zwei Fittingausgängen 5. Im vorliegenden Fall weist der Durchflusskanal 3 drei Kanalabschnitte 6, 7, 13 auf, welche sich entlang von jeweiligen Mittelachsen M6, M7, M13 erstrecken. Die Kanalabschnitte 6, 7, 13 bilden dabei den Durchflusskanal 3. In der gezeigten Ausführungsform verlaufen der erste Kanalabschnitt 6 und der dritte Kanalabschnitt 13 kollinear zueinander. Der zweite Kanalabschnitt 7 mündet zwischen dem ersten Kanalabschnitt 6 und dem dritten Kanalabschnitt 13 in die beiden Kanalabschnitte 6, 13 ein und steht hier rechtwinklig zum ersten Kanalabschnitt 6 und zum dritten Kanalabschnitt 13. Insofern verlaufen die erste Mittelachse M6 und die dritte Mittelachse M7 ebenfalls kollinear zueinander und die zweite Mittelachse M6 steht rechtwinklig zu der ersten Mittelachse M6 und zur dritten Mittelachse M13. Die Mittelachsen M6, M7, M13 schneiden sich.

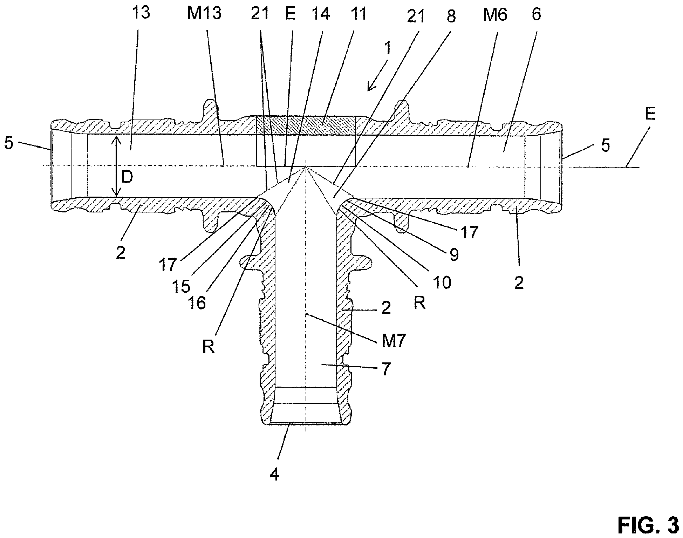

Im Bereich des Übergangs 8 zwischen dem ersten Kanalabschnitt 6 und dem zweiten Kanalabschnitt 7 ist eine innere Übergangskante 9 vorhanden. Die innere Übergangskante 9 ist mit einer Rundung 10 gerundet ausgebildet, so wie dies in der Figur 3 dargestellt wird. Ebenfalls ist im Bereich des Übergangs 14 zwischen dem dritten Kanalabschnitt 13 und dem zweiten Kanalabschnitt 7 eine weitere innere Übergangskante 14 mit einer Rundung 16 angeordnet. Die Ausdrucksweise innere Übergangskante ist insbesondere so zu verstehen, dass die innere Übergangskante am Innenradius des Rohrbogens liegt. Bezüglich der Rundung kann mit anderen Worten gesagt werden, dass eine Rundung 10, 16 rund um Mündungsbereich des zweiten Kanalabschnitt 7 in beiden anderen Kanalabschnitte 6, 13 vorgesehen ist. Die Rundungen 10, 16 haben den Vorteil, dass der Strömungswiederstand im Inneren des Fittings 1 reduziert werden kann. Gleichermassen haben die Rundungen 10, 16 aber den Nachteil, dass die Fertigung des Fittings 1 komplexer wird.

Für eine einfache und vor allem wirtschaftliche Fertigung des Fittings 1 weist das Fitting 1 weiter einen Einsatz 11 auf, der in die Gehäusewand 2 eingesetzt ist. Der Einsatz 11 ist bezüglich des Durchflusskanals 3 gegenüber den Übergangskanten 9, 15 angeordnet. Bezüglich des Verlaufes erster Kanalabschnitt 6 und zweiter Kanalabschnitt 7 kann gesagt werden, dass der Einsatz 11 aussenseitig angeordnet ist. Der Einsatz 11 ist dabei derart ausgebildet, dass die Übergangskanten 9, 15 mit den Rundungen 10, 16 bei der Herstellung zugänglich sind. Hierzu liegt der Einsatz 11 in einem Durchbruch 12 in der Gehäusewand 2. Der Durchbruch wird dann nach erfolgter Herstellung vom Einsatz 11 überdeckt bzw. ausgefüllt werden. Der Durchbruch 12 ist aber während der Herstellung des Fittings 1 frei vom Einsatz 11 und somit kann ein Werkzeug durch den Durchbruch 12 in den Durchflusskanal einragen, was insbesondere in der Figur 1 gezeigt ist. In dieser Figur ist der Einsatz 11 beabstandet zum Durchbruch 12 angeordnet und es kann gut erkannt werden, dass ein Zugang für ein Werkzeug zur Bereitstellung der Rundung 10, 16 geschaffen wird. In der Figur 2 wird der Einsatz 11 beim fertigen Fitting 1 gezeigt. Am fertig hergestellten Fitting 1 ist der Einsatz 11 fest im Durchbruch 12 platziert und erstreckt sich vollständig über den Durchbruch. Der Einsatz 11 stellt einen Teil der Gehäusewand 2 dar, mit welcher der Einsatz 11 stoffschlüssig mit der Gehäusewand 2 in Verbindung steht.

Das Fitting 1 wird vorzugsweise über zwei Fertigungsstufen hergestellt. In einer ersten Fertigungsstufe wird das Fitting 2 ohne den Einsatz 11 geformt, so wie dies in der Figur 1 dargestellt ist. In dem zweiten Herstelischritt wird dann der Einsatz 11 in den Durchbruch 12 eingeformt beziehungsweise eingesetzt.

Von der Figur 3 kann die Ausdehnung des Einsatzes 11 in Richtung der ersten Mittelachse M6 und der dritten Mittelachse M7 gut erkannt werden. Entlang diesen beiden Mittelachsen erstreckt sich der Einsatz 11 derart, dass dieser sich quer zur zweiten Mittelachse M7 gesehen mindestens über die lichte Weite des zweiten Kanalabschnittes 7 bis über die Rundung 10, 16 hinweg erstreckt. Der Einsatz 11 erstreckt sich also von Rundung 10 zur Rundung 16. Besonders bevorzugt erstreckt sich dabei der Einsatz bis an einen Übergangspunkt 17. Der Übergangspunkt 17 liegt auf einer Trennlinie 21, in welcher die Rundung 10, 16 in den zylindrischen Bereich 20 des jeweiligen Kanalabschnittes 6, 13 übergeht. Der Übergangspunkt 17 ist dabei der Punkt auf der Trennlinie 21, welcher mit einem maximalen Abstand zur zweiten Mittelachse M6 liegt. Mit anderen Worten ist der Einsatz 11 derart angeordnet, dass alle Bereiche der Rundung 10, 16 in einer Richtung rechtwinklig zu den Mittelachsen M6, M13, zugänglich ist.

Weiter ist, wie von der Figur 1 gezeigt wird, der Einsatz 11 derart geformt, dass sich dieser von einer Ebene E, welche rechtwinklig zur zweiten Mittelachse M7 sowie durch die erste bzw. die dritte Mittelachse M13 verläuft, sich bezüglich des zweiten Kanalabschnittes 7 von diesem wegerstreckt. Der Einsatz 11 liegt also gegenüber des zweiten Kanalabschnittes 1. Die Ebene E wird in der Figur 1 durch die Trennflächen dargestellt.

Der Einsatz 11 ist, wie in der Figur 1 gezeigt, bei einem T-Stück als halbzylindrische Schale ausgebildet.

Mit Bezug zur Figur 3 wird nun die Ausdehnung des Einsatzes 11 nochmals genauer erläutert. Der erste Kanalabschnitt 6 erstreckt sich entlang der ersten Mittelachse M6 bis hin zur Rundung 10 im Wesentlichen zylindrisch. Dieser zylindrische Bereich 20 weist dabei einen wesentlichen konstanten Durchmesser auf, abgesehen von einem Einlaufbereich im Bereich des Fittingausgangs 5. Gleichermassen erstreckt sich der dritte Kanalabschnitt 13 entlang der Mittelachse M13 bis hin zur Rundung 16 im Wesentlichen zylindrisch. Die Ausdehnung des Einsatzes 11 ist derart, dass sich dieser in den zylindrischen Bereich 20 hineinerstreckt oder derart, dass sich dieser bis mindestens zum Übergangspunkt 17 hin erstreckt.

Besonders bevorzugt erstreckt sich der Einsatz, so wie in der Figur 1 gezeigt von einer ersten Trennfläche 22 bis zu einer zweiten Trennfläche 23. Die beiden Trennflächen 22, 23 sind rechtwinklig zu den Mittelachsen M6, M13 orientiert. Eine Ebene, welche durch die Trennflächen definiert ist, erstreckt sich vorzugsweise durch den Übergangspunkt 17.

Die Trennstelle 18 zwischen der Gehäusewand 2 und dem Einsatz 11 ist hier als ebene Fläche dargestellt. Über die Trennstelle 18 steht der Einsatz 11 mit der Gehäusewand 2 in Verbindung. Die Fläche orientiert sich dabei je nach Fläche im Wesentlichen parallel bzw. rechtwinklig zu den jeweiligen Mittelachsen M6, M7 und M13. Die Trennstelle 18 kann in der Figur 1 gut erkannt werden. In alternativen Ausführungsformen ist es auch denkbar, die Trennstelle 18 als gestufte Fläche oder aber mit einem Hinterschnitt bereitzustellen, so dass zusätzlich zu stoffschlüssigen Verbindung zwischen der Gehäusewand 2 und dem Einsatz 11 noch ein formschlüssiger Teil bereitgestellt wird.

Die Gehäusewand 2 und der Einsatz 11 sind vorzugsweise aus demselben Kunststoff. Die Gehäusewand 2 und der Einsatz 11 stellen im verbundenen Zustand eine einstückige Struktur bereit. Die einstückige Struktur ist derart, dass diese nicht trennbar ist.

Der Radius R der Rundung 10, 16 ist in der Figur 3 eingezeichnet. Der Radius R der Rundung 10, 16 liegt vorzugsweise im Bereich von 20% bis 60% des Innendurchmessers D des jeweiligen Kanalabschnittes 7, 13. Besonders bevorzugt liegt der Radius im Bereich von 30 bis 40%. Diese Verhältnisse sind bezüglich des Strömungswiederstandes vorteilhaft. Die Innendurchmesser D der jeweiligen Kanalabschnitte 6, 7, 13 sind vorzugsweise gleich zueinander ausgebildet.

Aussenseitig, wie in den Figuren 1 und 2 dargestellt, weist jeder der Kanalabschnitte 6, 7, 13 eine Dichtkontur 19 auf. Auf dieser Dichtkontur 19 kann ein Rohr fluiddicht gelagert werden. Die Dichtkontur 19 ragt dabei in das Rohr ein. Stirnseitig wird die Dichtkontur 19 durch den Eingang 4 beziehungsweise den Ausgang 5 begrenzt und endet mit einem Flansch, welcher sich nach aussen hin von der Gehäusewand 2 weg erstreckt.

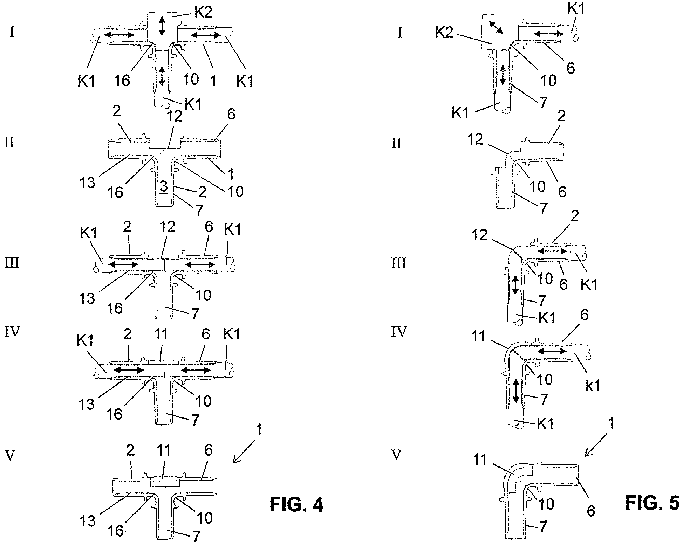

In der Figur 4 wird nun ein Herstellverfahren eines Fittings 1 in der Ausführungsform eines T-Stückes genauer gezeigt. In einem ersten Schritt I ist pro Kanalabschnitt 6, 7, 13 ein zylindrischer Kern K1 bereitgestellt. Weiter ist ein zusätzlicher Kern K2 vorhanden, welcher in den Schnittbereich zwischen den drei Kanalabschnitten 6, 7, 13 einragt. Die Aussenform des Spritzgiesswerkzeuges wird hier nicht dargestellt. Nach der Platzierung der Kerne Kl, K2 wird der Kunststoff eingespritzt und es resultiert ein Zwischenprodukt, welches beim Schritt II gezeigt wird. Es handelt sich dabei um den Fitting 1 mit dem Durchbruch 12, in welchen noch der Einsatz 11 einzusetzen ist. Der Durchbruch 12 wird dabei durch den zusätzlichen Kern K2 geformt, welcher an seiner Stirnseite ein Kontur zur Formung der besagten Rundungen 10, 16 aufweist.

Für das Einsetzen des Einsatzes 11 werden ein oder zwei Kerne K1 durch den ersten Kanalabschnitt 6 und durch den dritten Kanalabschnitt 13 in das Fitting 1 eingeschoben. Die beiden Kerne ragen dabei vollständig über die lichte Weite des Durchbruches 12, sodass in diesen der Einsatz 11 eingespritzt werden kann. Dies wird im Schritt III dargestellt. In dem Schritt VI wird der Einsatz 11 gemeinsam mit den beiden Kernen Kl, die sich immer noch im entsprechenden Kanalabschnitt 6, 13 befinden, gezeigt. Der Einsatz 11 wird dabei in den Durchbruch 12 eingespritzt und verbindet sich an den Trennstellen 18 mit der Gehäusewand 2 und stellt somit fortan ebenfalls einen Teil der Gehäusewand 2 bereit.

Im Schritt V wird dann das fertige Fitting 1 gezeigt. Der Einsatz 11 ist stoffschlüssig in den Durchbruch 12 eingesetzt.

In der Figur 5 wird die Abfolge der Herstellung eines Fittings in der Ausführungsform eines Rohrbogens gezeigt. Beim Schritt I werden zwei zylindrische Kerne K1 zur Formung der Kanalabschnitte 6, 7 und ein zusätzlicher Kern K2, welcher in die Schnittstelle zwischen den beiden Kanalabschnitten 6, 7 einragt, bereitgestellt. Es wird dann ein Zwischenprodukt des Fittings 1 gefertigt, wobei das Zwischenprodukt den Durchbruch 12 aufweist, in welchem der weitere Kern K2 zur Herstellung der Rundung 10 einragt. Der Durchbruch 12 und auch die Rundung 10 werden durch den weiteren Kern K2 geformt. Das Zwischenprodukt wird in dem Schritt II gezeigt.

Im Schritt III wird die weitere Verarbeitung des Zwischenproduktes gezeigt. Es werden zwei zylindrische Kerne K1 in den ersten Kanalabschnitt 6 und in den zweiten Kanalabschnitt 7 eingeschoben, sodass die lichte Weite des Durchbruchs 12 vollständig ausgefüllt ist.

Im Schritt VI wird dann der Einsatz 11 in den Durchbruch 12 eingespritzt und in dem Schritt V wird dann das fertige Fitting in der Gestalt eines Rohrbogens schematisch dargestellt.

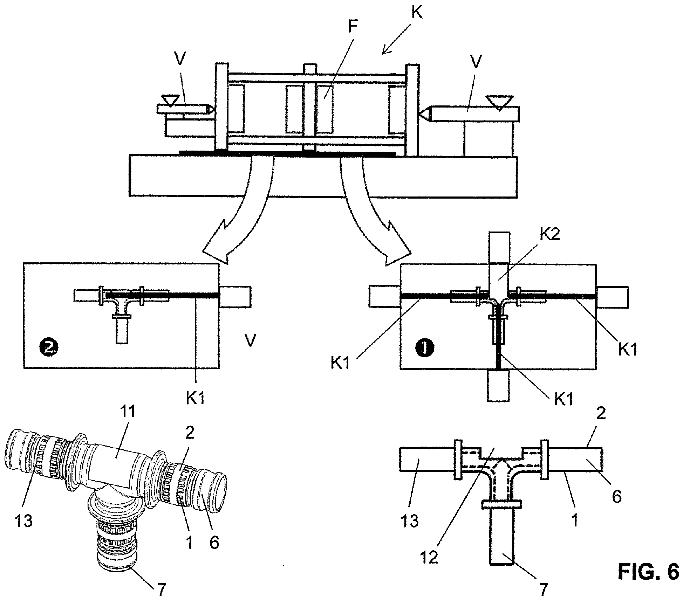

In der Figur 6 wird eine beispielhafte Vorrichtung zur Herstellung des Fittings 1 genauer gezeigt, wobei auf die Erläuterungen zur Figur 5 Bezug genommen wird. Es handelt sich dabei um Kunststoffspritzgiessmaschine K mit zwei Spritzaggregat V. Die Spritzgussform F ist dabei zentral zwischen den beiden Spritzaggregaten V gelagert. Durch das rechts dargestellte Spritzaggregat V wird dabei das Zwischenprodukt mit dem Durchbruch 12 gefertigt, so wie dies auf der rechten Seite dargestellt ist. In einem nächsten Schritt wird dann, wie auf der linken Seite der Figur 6 dargestellt, der Einsatz 11 in den Durchbruch 12 eingespritzt. Das Fitting 1 ist dann fertig hergestellt.

**BEZUGSZEICHENLISTE**

| | | | |
|---|---|---|---|
| 1 | Fitting | V | Spritzaggregat |
| 2 | Gehäusewand | F | Spritzgussform |
| 3 | Durchflusskanal | | |
| 4 | Fittingeingang | | |
| 5 | Fittingausgang | | |
| 6 | erster Kanalabschnitt | | |
| 7 | zweiter Kanalabschnitt | | |
| 8 | Übergang | | |
| 9 | innere Übergangskante | | |
| 10 | Rundung | | |
| 11 | Einsatz | | |
| 12 | Durchbruch | | |
| 13 | dritter Kanalabschnitt | | |
| 14 | Übergang | | |
| 15 | weitere innere Übergangskante | | |
| 16 | Rundung | | |
| 17 | Übergangspunkt | | |
| 18 | Trennstellen | | |
| 19 | Dichtkontur | | |
| 20 | zylindrischer Bereich | | |
| 21 | Trennlinie | | |
| 22 | erste Trennfläche | | |
| 23 | zweite Trennfläche | | |
| | | | |
| E | Ebene | | |
| R | Rundung | | |
| K | Kunststoffspritzgiessmaschine | | |

## Patentansprüche

1. Fitting (1), insbesondere aus Kunststoff, zum Umlenken oder Abzweigen von in Rohrleitungen strömenden Medien, umfassend
eine Gehäusewand (2), die einen Durchflusskanal (3) begrenzt, welcher sich mindestens von einem Fittingeingang (4) zu einem Fittingausgang (5) erstreckt,
wobei der Durchflusskanal (3) einen sich entlang einer ersten Mittelachse (M6) erstreckenden ersten Kanalabschnitt (6) und einen sich entlang einer zweiten Mittelachse (M7) erstreckenden zweiten Kanalabschnitt (7) umfasst,
wobei die beiden Mittelachsen (M6, M7) winklig geneigt, insbesondere rechtwinklig, zueinander stehen und die beiden Kanalabschnitte (6, 7) derart angeordnet sind, dass sich deren Mittelachsen (M6, M7) schneiden und
wobei im Bereich des Übergangs (8) zwischen dem ersten Kanalabschnitt (6) und dem zweiten Kanalabschnitt (7) eine innere Übergangskante (9) vom ersten Kanalabschnitt (6) zum zweiten Kanalabschnitt (7) gebildet ist, welche Übergangskante (9) mit einer Rundung (10) gerundet ausgebildet ist,
**dadurch gekennzeichnet,**
**dass** bezüglich des Durchflusskanals (3) gegenüber der Übergangskante (9) ein Einsatz (11) in die Gehäusewand (2) eingesetzt ist, welcher Einsatz (11) stoffschlüssig mit der Gehäusewand (2) in Verbindung steht, wobei der Einsatz (11) derart ausgebildet ist, dass die Übergangskante (9) mit der Rundung (10) während der Herstellung des Fittings durch einen Durchbruch (12), der vom Einsatz (11) überdeckt wird, zugänglich ist.

2. Fitting (1) nach Anspruch 1, **dadurch gekennzeichnet, dass** der Fitting (1) einen dritten Kanalabschnitt (13) umfasst, welcher sich entlang einer dritten Mittelachse (M13) erstreckt, wobei die dritte Mittelachse (M13) kollinear zur ersten Mittelachse (M6) verläuft, wobei im Bereich des Übergangs (14) zwischen dem zweiten Kanalabschnitt (7) und dem dritten Kanalabschnitt (13) eine weitere innere Übergangskante (15) vom zweiten Kanalabschnitt (7) zum dritten Kanalabschnitt (13) gebildet ist, welche Übergangskante (15) mit einer Rundung (16) gerundet ausgebildet ist, und wobei sich der besagte Einsatz (11) mindestens von der Übergangskante (9) zwischen dem ersten und zweiten Kanalabschnitt (6, 7) bis hin zur Übergangskante (15) zwischen dem zweiten und dritten Kanalabschnitt (7, 15) erstreckt.

3. Fitting nach einem der vorhergehenden Ansprüche, **dadurch gekennzeichnet, dass** die Form des Einsatzes (11) bzw. des Durchbruches (12) derart ausgebildet ist, dass durch die lichte Weite des Durchbruches (12) die Rundungen (10, 16) durch ein Werkzeug, welches durch den Durchbruch (12) einragt und relativ dazu bewegt wird, erreichbar sind.

4. Fitting nach Anspruch 2, **dadurch gekennzeichnet, dass** sich der Einsatz (11) quer zur zweiten Mittelachse (M7) mindestens über die lichte Weite des zweiten Kanalabschnittes (7) bis über die Rundung (10, 16) hinweg oder mindestens bis an den Rand der Rundung (10) erstreckt.

5. Fitting (1) nach einem der vorhergehenden Ansprüche, **dadurch gekennzeichnet, dass** sich der erste Kanalabschnitt (6) entlang der ersten Mittelachse (M6) gesehen bis hin zur Rundung (10) zylindrisch mit im Wesentlichen konstantem Durchmesser erstreckt, wobei sich der Einsatz (11) in Richtung der ersten Mittelachse (M6) vom zylindrischen Bereich (20) zur zweiten Mittelachse (M7) hin über die besagte Rundung (10) hinweg erstreckt oder dass sich der Einsatz von einem Übergangspunkt (17) zwischen dem zylindrischen Bereich und der Rundung (10) zur zweiten Mittelachse (M7) hin erstreckt.

6. Fitting nach Anspruch 5, **dadurch gekennzeichnet, dass** sich der zweite Kanalabschnitt (7) entlang der zweiten Mittelachse (M7) gesehen bis hin zur Rundung (10) zylindrisch mit im Wesentlichen konstantem Durchmesser erstreckt, wobei sich der Einsatz (11) quer zur zweiten Mittelachse (M7) vom zylindrischen Bereich (20) zur ersten Mittelachse (M6) hin über die besagte Rundung (10) hinweg erstreckt oder dass sich der Einsatz von einem Übergangspunkt (17) zwischen dem zylindrischen Bereich und der Rundung (10) zur ersten Mittelachse (M6) hin erstreckt.

7. Fitting (1) nach einem der Ansprüche 3, 5 oder 6, **dadurch gekennzeichnet, dass** sich der dritte Kanalabschnitt (13) entlang der dritten Mittelachse (M13) gesehen bis hin zur Rundung (16) zylindrisch im Wesentlichen mit konstantem Durchmesser erstreckt, wobei sich der Einsatz (11) in Richtung der dritten Mittelachse (M13) vom zylindrischen Bereich zur zweiten Mittelachse (M7) hin über die besagte Rundung (16) hinweg erstreckt.

8. Fitting (1) nach einem der vorhergehenden Ansprüche, **dadurch gekennzeichnet, dass** sich der Einsatz (11) von einer Ebene (E), welche rechtwinklig zur zweiten Mittelachse (M7) und durch die erste bzw. die dritte Mittelachse (M6, M13) verläuft, bezüglich des zweiten Kanalabschnittes (7) weg erstreckt, so dass der Einsatz (11) gegenüber des zweiten Kanalabschnittes (7) liegt.

9. Fitting (1) nach einem der vorhergehenden Ansprüche, **dadurch gekennzeichnet, dass** der Einsatz (11) schalenförmig, insbesondere als halbzylindrische Schale ausgebildet ist, wobei sich der Einsatz (11) vorzugsweise um den halben Umfang des ersten und ggf. des dritten Kanalabschnittes (6, 13) erstreckt, oder dass der Einsatz (11) schalenförmig, insbesondere als Teilschale der Aussenseite eines Rohrbogens ausgebildet ist.

10. Fitting (1) nach einem der vorhergehenden Ansprüche, **dadurch gekennzeichnet, dass** die Trennstellen (18) zwischen der Gehäusewand (2) und dem Einsatz (11) als ebene oder gestufte Flächen ausgebildet sind; und/oder, dass die Trennstellen zwischen der Gehäusewand (2) und dem Einsatz als Flächen ganz oder mit Flächenabschnitten rechtwinklig und/oder parallel und/oder winklig geneigt zu den Mittelachsen (M6, M7, M13) verlaufen.

11. Fitting (1) nach einem der vorhergehenden Ansprüche, **dadurch gekennzeichnet, dass** die Gehäusewand (2) und der Einsatz (11) aus demselben Kunststoff sind.

12. Fitting (1) nach einem der vorhergehenden Ansprüche, **dadurch gekennzeichnet, dass** jeder der Kanalabschnitte (6, 7, 13) aussenseitig mit einer Dichtkontur (19) ausgebildet ist, auf welcher ein Rohr fluiddicht lagerbar ist.

13. Fitting (1) nach einem der vorhergehenden Ansprüche, **dadurch gekennzeichnet, dass** der Radius (R) der Rundung (10, 16) im Bereich von 20% bis 60%, insbesondere im Bereich von 30% bis 40%, des Innendurchmessers der jeweiligen Kanalabschnitt (6, 7, 13) liegt.

14. Spritzgiessverfahren zur Herstellung eines Fittings (1) nach einem der vorhergehenden Ansprüche, **dadurch gekennzeichnet,**
**dass** in einem ersten Schritt die Gehäusewand (2) ohne den Einsatz (11) hergestellt wird, wobei pro Kanalabschnitt (6, 7, 13) ein zylindrischer Kern (K1) bereitgestellt wird und wobei durch den Durchbruch (12), welcher vom Einsatz (11) überdeckt wird, ein zusätzlicher Kern (K2) zur Bereitstellung der besagten Rundung (10) durch die Gehäusewand (2) in den Durchflusskanal (3) einragt, und
**dass** in einem zweiten Schritt mindestens ein Kern (K1) entlang des ersten und/oder des dritten Kanalabschnittes (6, 13) in den Durchflusskanal (3) bis in Bereich des Durchbruches (12) eingeschoben wird und wobei der Durchbruch (12) mit dem Einsatz (11) zugespritzt wird.

15. Spritzgiessverfahren nach Anspruch 14, **dadurch gekennzeichnet, dass** die beiden Schritte in der gleichen Spritzgiessform ausgeführt werden.
